# EUROPEAN PATENT SPECIFICATION

(11) **EP 3 843 495 B1**
(45) Date of publication and mention of the grant of the patent: **29.11.2023**
(21) Application number: 19920293.8
(22) Date of filing: 18.03.2019
(51) Int. Cl.: H04W 76/10, H04W 4/80, H04W 76/11, H04W 12/50

(54) **COMMUNICATION METHOD AND APPARATUS, AND DEVICE**
KOMMUNIKATIONSVERFAHREN UND EINRICHTUNG UND VORRICHTUNG
PROCÉDÉ ET APPAREIL DE COMMUNICATION, ET DISPOSITIF

(43) Date of publication of application: 30.06.2021
(73) Proprietor: Spreadtrum Communications (Shanghai) Co., Ltd., Shanghai 201203 (CN)
(72) Inventor: CHEN, Guochu, Shanghai 201203 (CN)
(74) Representative: Finnegan Europe LLP
(86) International application number: PCT/CN2019/078565
(87) International publication number: WO 2020/186429

(56) References cited:
- EP-A1- 3 843 467
- WO-A1-2020/133183
- CN-A- 103 270 707
- CN-A- 105 471 481
- CN-A- 106 937 197
- CN-A- 108 738 003
- CN-A- 108 738 003
- CN-A- 109 348 459
- CN-A- 109 922 540
- TW-A- 201 639 385
- US-B1- 10 588 167

## Description

### TECHNICAL FIELD

Embodiments of the present invention relate to the field of electronic technology, particularly to a communication method, an apparatus and a device.

### BACKGROUND ART

In a data transceiving device system of wireless devices, data exchange between a data source device and different forms of wireless transceiving devices can be realized. Currently, with the increase of user demand, the wireless transceiving devices connected to a data source device have gradually shifted from a single wireless transceiving device to double wireless transceiving devices or even multiple wireless transceiving devices. For many application scenarios, the data of the data source device need to be transmitted to a plurality of wireless transceiving devices, for example, a mobile phone needs to transmit audio to two Bluetooth headsets. When the data of the data source device need to be transmitted to a plurality of wireless transceiving devices, the data source device first pairs and establishes a connection with a master wireless transceiving device among the plurality of wireless transceiving devices, the data source device sends the data to the master wireless transceiving device, and then the master wireless transceiving device sends the data to slave wireless transceiving devices. However, when the master wireless transceiving device fails, the data source device is unable to send the data of the data source device to the plurality of wireless transceiving devices, resulting in poor communication reliability.

CN 108 738 003 A discloses a Bluetooth ^{®} matching method and system based on a shared Bluetooth ^{®} communication address. The method comprises the steps of presetting an initial physical address, setting a Bluetooth ^{®} communication address, matching a first slave device with a master device by the Bluetooth ^{®} communication address to form pairing information, sending the pairing information to a second slave device that shares the Bluetooth ^{®} communication address with the first slave device, and pairing the second slave device with the master device according to the pairing information. Through setting the Bluetooth ^{®} communication address, the first slave device is matched with the master device by the Bluetooth ^{®} communication address; the formed pairing information is shared and exchanged with the slave device that shares the Bluetooth ^{®} communication address, so as to finish the Bluetooth ^{®} matching process between each slave device and the master device; as long as one slave device is paired with the master device, a plurality of slave devices share the pairing information; the master device has the information of only one slave device; and thus, the selection difficulty of the user on the display interface of the master device is reduced, the user experience is improved, and the matching time and frequency are reduced.

CN 103 270 707 A discloses a method and system for Bluetooth ^{®} communication, which enables a Bluetooth ^{®} device to be connected to other terminals without a pairing process and then communicate data through Bluetooth ^{®} communication, when the Bluetooth ^{®} device is paired with any of a plurality of terminals having the same device information. The Bluetooth ^{®} communication method according to one embodiment of the present invention may comprise the steps of: a receiving unit in a central communication server receiving communication information from a first terminal when the first terminal and the Bluetooth ^{®} device are paired; a transmitting unit in the central communication server transmitting the communication information to a second terminal having the same device information as the first terminal; and the second terminal establishing a communication channel with the Bluetooth ^{®} device, without the pairing process, on the basis of the communication information.

EP 3 843 467 A1 discloses a wireless connection method, comprising: a wireless transceiving device group establishing a bidirectional connection with a data source device by means of a device group identifier, wherein the wireless transceiving device group comprises at least two wireless transceiving devices, the wireless transceiving device group is configured with the device group identifier, and the device group identifier is used to identify the wireless transceiving device group. According to the wireless connection method provided in the present invention, after a device group identifier is configured for a wireless transceiving device group, a bidirectional connection is established with an external data source device by means of the device group identifier, such that data of a data source is synchronized with wireless transceiving devices in the wireless transceiving device group, so as to realize the synchronization of data of wireless transceiving devices in the wireless transceiving device group.

WO 2020/133183 A1 discloses an audio data synchronization method and device, which relate to the field of short-distance communications. When a wireless connection is established between a mobile phone and a plurality of Bluetooth devices, play-level synchronization of audio data between the plurality of Bluetooth devices is realized. The method comprises: an electronic device sending, by means of a first CIS of a CIG, a data packet to a first earbud that establishes a wireless connection with the electronic device, and sending, by means of a second CIS of the CIG, the data packet to a second earbud that establishes a wireless connection with the electronic device, wherein the data packet comprises: audio data, an audio timestamp of the data packet and an initial Bluetooth timestamp; the initial Bluetooth timestamp is a Bluetooth timestamp of a first data packet transmitted after the electronic device establishes the first CIS with the first earbud and establishes the second CIS with the second earbud; the audio timestamp and the initial Bluetooth timestamp are used for the first earbud and the second earbud to determine a CIG play point; and the CIG play point is a time point at which the first earbud and the second earbud play the audio data.

### SUMMARY OF THE INVENTION

One aspect of the present invention provides a method of communication in accordance with claim 1.

Another aspect of the present invention provides a method of communication in accordance with claim 12.

Further aspects of the present invention provide a non-transitory computer readable medium, a communication apparatus, a communication group and a communications system in accordance with claims 16-19.

Other aspects of the present invention are the subject of the dependent claims.

In embodiments of the present invention after a first device pairs with a data source device by means of an identifier of a device group so as to obtain pairing information, the first device sends the pairing information to at least one second device in the device group, so that the second device establishes a connection with the data source device according to the pairing information. When the second device establishes a connection with a data source device, the second device does not need to pair with the data source device, and establishes a connection with the data source device according to the pairing information to improve communication reliability. As the second device does not need to pair with the data source device when establishing a connection with the data source device, the user can realize the connection without perception, thereby improving user experience, and raising the connection establishment efficiency and communication efficiency.

### BRIEF DESCRIPTION OF THE DRAWINGS

To describe the technical solutions in the embodiments of the present invention or in the prior art more clearly, the following briefly describes the accompanying drawings needed for describing the embodiments or the prior art.
Fig. 1 is an architecture diagram of a communication system provided by embodiments of the present invention;
Fig. 2 is a schematic diagram of an application scenario provided by embodiments of the present invention;
Fig. 3 is a flow diagram of a communication method provided by embodiments of the present invention;
Fig. 4A is a schematic view of a device connection provided by embodiments of the present invention;
Fig. 4B is a schematic view of an alternative device connection provided by embodiments of the present invention;
Fig. 4C is a schematic view of an alternative device connection provided by embodiments of the present invention;
Fig. 4D is a schematic view of an alternative device connection provided by embodiments of the present invention;
Fig. 5 is a flow diagram of an alternative communication method provided by embodiments of the present invention;
Fig. 6 is a schematic view of a communication process provided by embodiments of the present invention;
Fig. 7 is a structural schematic view of a communication apparatus provided by embodiments of the present invention;
Fig. 8 is a structural schematic view of an alternative communication apparatus provided by embodiments of the present invention;
Fig. 9 is a structural schematic view of hardware of the communication apparatus provided by embodiments of the present application;
Fig. 10 is a structural schematic view of hardware of the communication apparatus provided by the present application.

### DETAILED DESCRIPTION

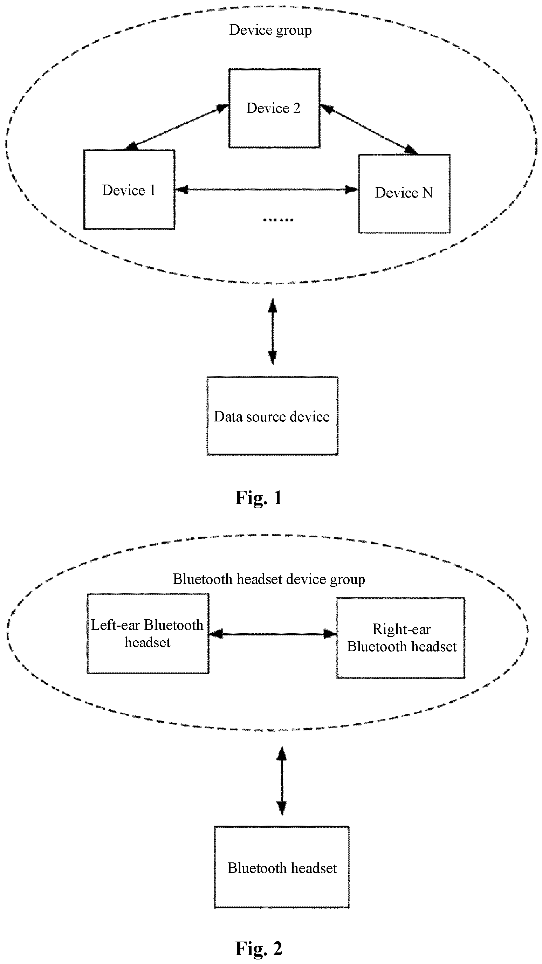

Fig. 1 is an architecture diagram of a communication system provided by embodiments of the present invention. The communication system comprises a device 1, a device 2, ......, a device N and a data source device. Among them, the device 1, the device 2, ...... and the device N are paired and connected to form a device group, and the devices in the device group may communicate with each other so that data can be transmitted among the devices in the device group, i.e., the devices in the device group may obtain the same data. After formation of the device group, an identifier of the device group may be generated, which is used to uniquely identify the device group.

The data source device may be a device providing data to the devices in the device group. The data may be multimedia data (e.g., audio data). The data source device may establish a connection with at least one device in the device group, and send data to the at least one device so that the the at least one device sends the data to other devices in the device group and the devices in the device group can receive the same data. Or the data source device may also establish a connection with every device in the device group respectively, and send data to every device in the device group so that the devices in the device group can receive the same data.

Any first device in the device group may pair with a data source device by means of an identifier of the device group to generate pairing information, and establish a connection with the data source device according to the pairing information. The first device may further send the pairing information to other devices in the device group (e.g., the second device). In this case, when the second device in the device group needs to establish a connection with the data source device (e.g., when the first device is faulty), the second device does not need to pair with the data source device, and may establish a connection with the data source device according to the pairing information to improve communication reliability. As the second device does not need to pair with the data source device when establishing a connection with the data source device, the user can realize the connection without perception, thereby improving user experience, and raising the connection establishment efficiency and communication efficiency.

Fig. 2 is a schematic diagram of an application scenario provided by embodiments of the present invention. As shown in Fig. 2, there is a left ear Bluetooth headset, a right-ear Bluetooth headset and a Bluetooth mobile phone. The left-ear Bluetooth headset and the right-ear Bluetooth headset may be paired and connected to form a Bluetooth headset device group and an identifier of the Bluetooth headset device group is generated.

A Bluetooth mobile phone is used to provide the same audio data to the left-ear Bluetooth headset and the right-ear Bluetooth headset. In the process of actual application, the left-ear Bluetooth headset may pair with the Bluetooth mobile phone by means of an identifier of the Bluetooth headset group to generate pairing information, and establish a connection with the Bluetooth mobile phone according to the pairing information. After the left-ear Bluetooth headset establishes a connection with the Bluetooth mobile phone, the left-ear Bluetooth headset may receive data from the Bluetooth mobile phone, and send the received data to the right-ear Bluetooth headset by means of synchronization.

The left-ear Bluetooth headset may also send the pairing information to the right-ear Bluetooth headset. In this way, when the left-ear Bluetooth headset is faulty, the right-ear Bluetooth headset may establish a connection with the Bluetooth mobile phone according to the pairing information to avoid the problem that the right-ear Bluetooth headset is unable to send data to the Bluetooth mobile phone when the left-ear Bluetooth headset is faulty, and to improve communication reliability. In the process of establishing a connection with the Bluetooth mobile phone, the right-ear Bluetooth headset does not need to pair with the Bluetooth mobile phone, so the user can realize the connection between the right-ear headset and the Bluetooth mobile phone without perception, thereby improving user experience and raising connection establishment efficiency and communication efficiency.

It should be noted that Fig. 2 only shows an application scenario in an exemplary manner and does not limit the application scenario. In the process of actual application, the application scenario may be set according to the actual needs, and embodiments of the present invention do not limit it.

Below, the technical solutions shown in the present application will be described in detail with reference to specific embodiments. It should be noted that the following few embodiments may be combined with each other and the same or similar content will not be described repeatedly in different embodiments.

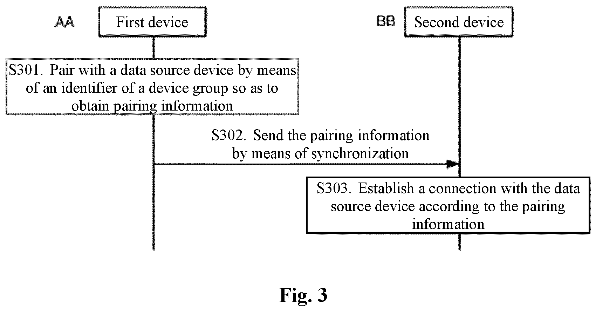

Fig. 3 is a flow diagram of a communication method provided by embodiments of the present invention. As shown in Fig. 3, the method comprises:
S301: A first device pairs with a data source device by means of an identifier of a device group so as to obtain pairing information.

The device group comprises at least two devices, and the first device is any device in the device group.

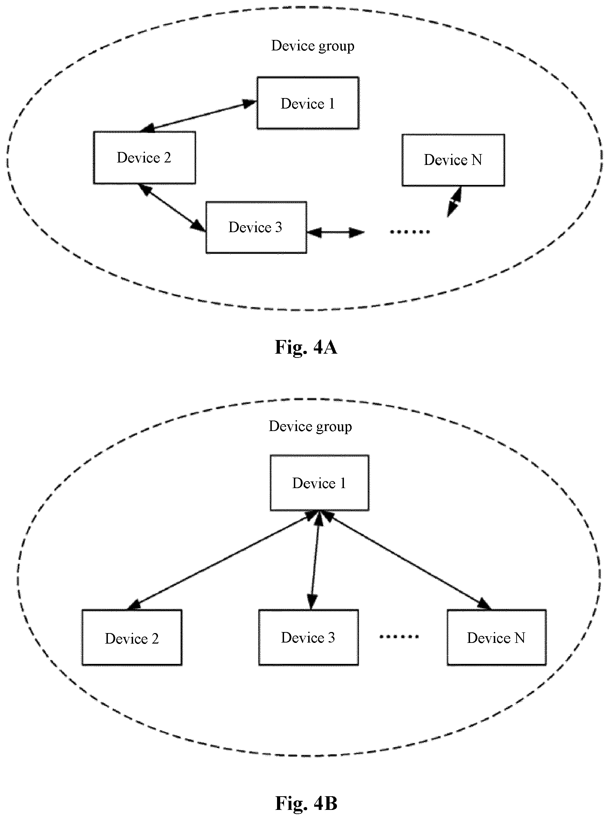

At least two devices in the device group communicate with each other so that data can be transmitted among the devices in the device group. Below, with reference to Fig. 4A to Fig. 4D, the connection (communication connection, wired or wireless) of the at least two devices in the device group is described.

Fig. 4A is a schematic view of device connection provided by embodiments of the present invention. As shown in Fig. 4A, the devices in the device group are connected in turn. For example, a device 1 is connected to a device 2, the device 2 is connected to a device 3, and a device N-1 is connected to a device N. In this way, after any device in the device group receives data, the data may be transmitted to other devices by means of connection between devices.

Fig. 4B is a schematic view of an alternative device connection provided by embodiments of the present invention. As shown in Fig. 4B, a device in the device group is connected to all of other devices respectively, and the device may be the device establishing a connection with a data source device. For example, a device 1 is connected to a device 2, a device 3, ...... and a device N respectively. In this way, after the device 1 in the device group receives data, the data may be transmitted to other devices in the group.

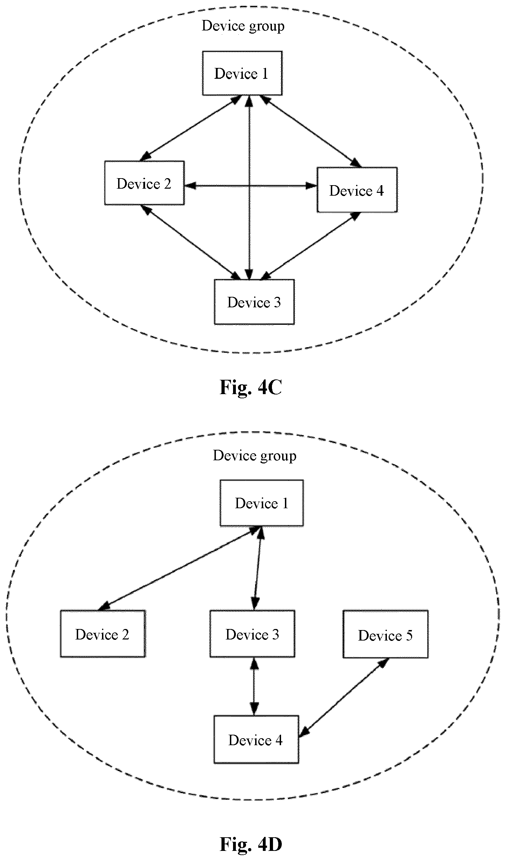

Fig. 4C is a schematic view of an alternative device connection provided by embodiments of the present invention. As shown in Fig. 4C, every two devices in the device group are connected. For example, in a device 1, a device 2, a device 3 and a device 4, a connection is established between every two devices. In this way, after any device in the device group receives data, the data may be transmitted to other devices by means of connection between devices.

Fig. 4D is a schematic view of an alternative device connection provided by embodiments of the present invention. As shown in Fig. 4D, every device in the device group is connected to at least one other device. For example, a device 1 is connected to a device 2 and a device 3 respectively, and a device 4 is connected to the device 3 and a device 5 respectively. In this way, after any device in the device group receives data, the data may be transmitted to other devices by means of connection between devices.

It should be noted that the foregoing Fig. 4A to Fig. 4D only show a connection relation between devices in the device group in an exemplary manner and do not limit the connection relation. In the process of actual application, the connection relation between the devices in the device group may be determined according to the actual needs.

Alternatively, the devices in the device group are wireless transceiving devices or wired transceiving devices. That is to say, the devices in the device group have a receiving function and/or a sending function. The wireless transceiving devices may be Bluetooth devices, for example, the Bluetooth devices may be Bluetooth audio devices. The Bluetooth audio devices may be Bluetooth headsets or Bluetooth speakers.

Alternatively, the identifier of the device group is determined according to a present addressing rule. For example, the preset addressing rule may indicate at least one of the format and length of the identifier of the device group.

Alternatively, the identifier of the device group is the same as an identifier of a device in the device group. The identifier of the device may be an address of the device. For example, when the device is a Bluetooth device, the identifier of the device may be a Bluetooth address of the device. For example, the identifier of any device in the device group may be determined as an identifier of the device group. Or the identifier of a designated device in the device group may be determined as an identifier of the device group. The designated device may be the device first added to the device group, or the device last added to the device group.

Every device in the device group may store device group information of the device group. For example, the device group information may be stored in the devices in the form of data structure. Alternatively, the device group information contains an identifier of the device group and an identifier of every device in the device group.

For example, it is assumed that a device group comprises three devices and the three devices are a device 1, a device 2 and a device 3, then the device group information may be as shown in Table 1:

**Table 1**

| Device group information | |
|---|---|
| Identifier of device group | Identifiers of devices in the device group |
| Group identifier | Identifier 1 of device 1 |
| | Identifier 2 of device 2 |
| | Identifier 3 of device 3 |

It should be noted that Table 1 shows the device group information only in an exemplary manner and does not limit the device group information.

Alternatively, before a first device pairs with a data source device by means of an identifier of the device group, the state of every device in the device group is a state of being visible to devices outside the group. An identifier of the devices in the device group that is visible to devices outside the device group is the identifier of the device group, and an identifier of a device in the device group that is visible to devices inside the device group is the identifier of the device.

The data source device is a device outside the device group. As the identifier of every device that is visible to the data source device is an identifier of the device group, the data source device may find devices in the device group by means of the identifier of the device group. As the identifier of all devices in the device group that are visible to the data source device are the same, a device found by the data source device according to the identifier of the device group is any device in the device group.

Supposing that the data source device finds a first device in the device group according to the identifier of the device group, the data source device may pair with the first device by means of the identifier of the device group. The process of the pairing between the data source device and the first device is a process of authentication.

The process of the pairing between the data source device and the first device may be as follows: verification information of the first device may be set. The verification information of the first device may be verification information of the device group. When the data source device pairs with the first device, the verification information of the first device may be input into the data source device. The data source device sends a pairing request containing the verification information to the first device. When the first device judges that the verification information in the pairing request is the same as the verification information of the first device, then the pairing is successful. Or verification information of the data source device may be set. When the data source device pairs with the first device, the verification information of the data source device may be input into the first device. The first device sends a pairing request containing the verification information to the data source device. When the data source device judges that the verification information in the pairing request is the same as the verification information of the data source device, the pairing is successful.

After the first device pairs with the data source device by means of the identifier of the device group, pairing information is generated. Alternatively, the pairing information may be generated according to the identifier of the device group and the identifier of the data source device. Of course, the pairing information may also be generated according to other information, which is not limited in the embodiments of the present invention.

The pairing information is information based on which the devices in the device group establish connections with the data source device. That is, when any device in the device group establishes a connection with the data source device, the pairing information is needed as a basis.

Alternatively, the pairing information may contain a link key. When any device in the device group establishes a connection with the data source device, the link key is needed. Of course, the pairing information may contain other contents, too, which are not limited in the embodiments of the present invention.

It should be noted that after the first device obtains the pairing information generated after pairing between the first device and the data source device, the first device and the data source device may establish a connection with the pairing information.

S302: The first device sends the pairing information to at least one second device in the device group by means of synchronization.

Alternatively, the number of the at least one second device may be one, or multiple. The at least one second device may also be all the devices in the device group except the first device.

When the number of the at least one second device is M, the M second devices may be any M devices in the device group except the first device, or may be designated M devices in the device group except the first device. M is an integer greater than or equal to 1.

Alternatively, the first device may send pairing information to at least one second device by means of synchronization by at least following two feasible realization methods:
A feasible realization method:
It may be that a preset storage area is distributed for the devices in the device group. All the devices in the device group may access the preset storage area. The first device may store pairing information in the preset storage area. Accordingly, other devices in the device group may read the pairing information from the preset storage area.

In the feasible realization method, through the preset storage area, the first device may send pairing information to at least one second device by means of synchronization so that the first device does not need to separately send the pairing information to every second device and the power consumption of the first device is small.

Another feasible realization method:
The first device sends pairing information to at least one second device. The first device may send the pairing information to at least one second device in a wired or wireless manner.

Alternatively, the first device may send the pairing information to a second device directly. For example, the first device sends the pairing information to every second device respectively. The first device may further send the pairing information to the second device indirectly. For example, the first device sends the pairing information to one of second devices, and the second device then sends the pairing information to other second devices.

S303: The second device establishes a connection with the data source device according to the pairing information.

Alternatively, when the preset conditions are met, the second device establishes a connection with the data source device according to the pairing information.

Alternatively, the preset conditions may include at least one of the following conditions: A link between the first device and the data source device is faulty; the electric quantity of the first device is smaller than a first threshold value; the device state of the first device is an abnormal state; and the quality of a signal between the first device and the data source device is smaller than a second threshold value.

The device state of the first device being an abnormal state may mean that the first device is in a pause state, a faulty state, etc. For example, when the first device is a Bluetooth headset, the state of the first device may be a state of being outside the ear, i.e., the first device is not in an ear of the user.

The quality of a signal between the first device and the data source device may include the intensity of the signal between the first device and the data source device.

Alternatively, the preset conditions may be detected by the data source device. When the data source device determines that the preset conditions are met, the data source device sends a request for establishing a connection to the second device. After the second device receives a connection establishment request, the second device establishes a connection with the data source device according to the pairing information.

Alternatively, the preset conditions may be detected by the second device. When the second device determines that the preset conditions are met, the second device sends a connection establishment request to the data source device. The connection establishment request contains pairing information. The data source device receives the connection establishment request from the second device according to the pairing information to realize establishment of a connection between the second device and the data source device.

According to the communication method provided by embodiments of the present invention, after a first device pairs with a data source device by means of an identifier of a device group so as to obtain pairing information, the first device sends the pairing information to at least one second device in the device group so that the second device may establish a connection with the data source device according to the pairing information. When the second device establishes a connection with the data source device, the second device does not need to pair with the data source device. According to the pairing information, a connection may be established with the data source device to improve communication reliability. As the second device does not need to pair with the data source device when establishing a connection with the data source device, the user can realize the connection without perception, thereby improving user experience, and raising the connection establishment efficiency and communication efficiency.

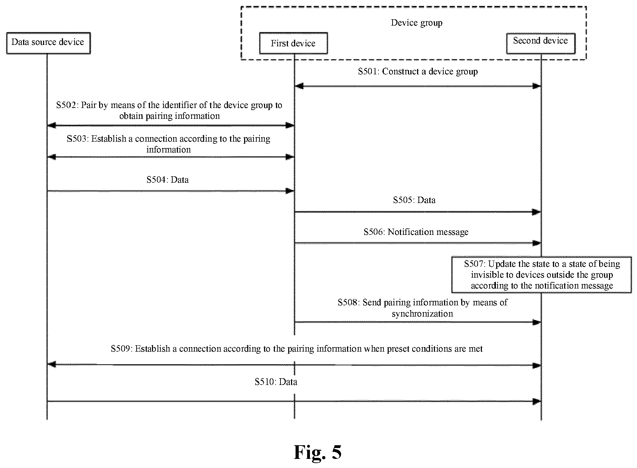

On the basis of any of the foregoing embodiments, the communication method is described below with reference to Fig. 5 by taking a device group comprising a first device and a second device for example.

Fig. 5 is a flow diagram of an alternative communication method provided by embodiments of the present invention. As shown in Fig. 5, the method may comprise:
S501: Construct a device group, comprising a first device and at least one second device.

Alternatively, the device group may be obtained by the manufacturer by means of pairing with and connecting a plurality of devices (comprising a first device and at least one second device) during delivery, or may be obtained by the user by means of pairing with and connecting a plurality of devices (comprising a first device and at least one second device) during use.

Alternatively, an identifier of the device group is generated in the process of constructing the device group, or after construction of the device group. The identifier of the device group can uniquely identify a device group. The identifier of the device group may be as shown in S301, and is not described again here.

A device group may be constructed by at least following two realization methods:
A feasible realization method: The device group comprises two devices.

In the feasible realization method, an instruction for constructing a device group is input and the two devices are paired and connected to construct a device group.

For example, supposing the device group comprises a left-ear Bluetooth headset and a right-ear Bluetooth headset, then during construction of the device group, an instruction for constructing a device group may be first input into the left-ear Bluetooth headset, for example, a first preset key in the left-ear Bluetooth headset may be pressed to input the instruction for constructing a device group. After the instruction for constructing a device group is input, the left-ear Bluetooth headset and the right-ear Bluetooth headset may be paired and connected. After the left-ear Bluetooth headset and the right-ear Bluetooth headset are paired and connected successfully, the device group is constructed successfully. For example, preset keys in the left-ear Bluetooth headset and the right-ear Bluetooth headset may be pressed to realize pairing and connection between the left-ear Bluetooth headset and the right-ear Bluetooth headset.

In another feasible realization method, the device group comprises more than two devices.

In the feasible realization method, an instruction for constructing a device group is input and two devices in the device group are paired and connected to add the two devices into the device group, and then other devices and the devices in the device group are paired and connected to add other devices into the device group. After construction of the device group, an instruction for completing construction of the device group may be input, too.

For example, supposing the device group comprises a Bluetooth sound box 1, Bluetooth sound box 2 and Bluetooth sound box 3, then when the device group is constructed, an instruction for constructing a device group may be first input into the Bluetooth sound box 1. For example, a first press operation may be performed on a preset key in the Bluetooth sound box 1 to input an instruction for constructing a device group. After the instruction for constructing a device group is input, the Bluetooth sound box 1 and the Bluetooth sound box 2 may be paired and connected. After the Bluetooth sound box 1 and the Bluetooth sound box 2 are paired and connected successfully, a device group comprising a Bluetooth sound box 1 and a Bluetooth sound box 2 has been constructed, and then the Bluetooth sound box 3 and the Bluetooth sound box 1 are paired and connected to add the Bluetooth sound box 3 into the device group. After construction of the device group, an instruction for completing construction of the device group may be input, too. For example, a second press operation may be performed on the preset key to input an instruction for completing construction of the device group.

It should be noted that the above description only illustrates the methods for constructing a device group in the form of an example and does not limit the methods for constructing a device group. In the process of actual application, a device group may be constructed according to the actual needs, which is not limited in the embodiments of the present invention.

S502: A first device pairs with a data source device by means of an identifier of a device group so as to obtain pairing information.

It should be noted that the implementation process of S502 may refer to the implementation process of S301 and is not described again here.

S503: The first device establishes a connection with the data source device according to the pairing information.

Alternatively, the first device may request the data source device to establish a connection. For example, the first device may send a request for establishing a connection to the data source device. The request for establishing a connection contains the pairing information. The data source device accepts the request for establishing a connection according to the pairing information to realize establishment of a connection between the first device and the data source device.

Alternatively, the data source device may request the first device to establish a connection. For example, the data source device may send a request for establishing a connection to the first device. The request for establishing a connection contains an identifier of the data source device, and the first device the request of the data source device for establishing a connection according to the identifier of the data source device and the pairing information to realize establishment of a connection between the first device and the data source device.

S504: The data source device sends data to the first device.

For example, when the first device is a Bluetooth headset, the data sent by the data source device to the first device may be Bluetooth audio data.

S505: The first device sends the received data to the second device by means of synchronization.

It should be noted that after the first device establishes a connection with the data source device, the data source device may send data to the first device, and the first device sends the received data to other devices in the device group by means of synchronization.

Alternatively, the first device may send the received data to the second device by means of synchronization by various feasible realization methods.

A feasible realization method:
It may be that a shared memory is distributed to the devices in the device group. The devices in the device group all may access the shared memory. The first device may store pairing information in the shared memory. Accordingly, other devices in the device group may also read the pairing information from the shared memory.

In the feasible realization method, through the shared memory, the first device may send the received data to at least one second device by means of synchronization so that the first device does not need to separately send the pairing information to every second device and the power consumption of the first device is small.

Another feasible realization method:
The first device sends the received data to the second device. The first device may send the received data to the second device in a wired or wireless manner.

It should be noted that S404 and S405 may be optional steps.

S506: The first device sends a notification message to the second device.

The notification message is used to instruct the second device to update the state to a state of being invisible to devices outside the group.

Alternatively, the second device is all the devices in the device group except the first device, that is, the first device sends the notification message to all other devices in the device group except the first device.

S507: The second device updates the state to a state of being invisible to devices outside the group according to the notification message.

After the second device updates the state to a state of being invisible to devices outside the group, the data source device is unable to find the second device. In this way, pairing and connection between the data source device and the second device can be avoided.

Alternatively, after the first device pairs with a data source, the first device may further update the state to a state of being invisible to devices outside the group.

S508: The first device sends pairing information to at least one second device by means of synchronization.

It should be noted that the implementation process of S508 may refer to the implementation process of S302 and is not described again here.

S509: When the preset conditions are met, the second device establishes a connection with the data source device according to pairing information.

It should be noted that the implementation process of S509 may refer to the implementation process of S303 and is not described again here.

S510: The data source device sends data to the second device.

It should be noted that, embodiments of the present invention do not limit the implementation sequence of the above steps. For example, S504-S505, S506-S507 and S508 may be implemented in sequence or in parallel.

In the embodiment shown in Fig. 5, after a first device pairs with a data source device by means of an identifier of a device group so as to obtain pairing information, the first device sends the pairing information to at least one second device in the device group. When the preset conditions are met, the second device establishes a connection with the data source device according to the pairing information. When the second device establishes a connection with the data source device, the second device does not need to pair with the data source device, and establishes a connection with the data source device according to the pairing information to improve communication reliability. As the second device does not need to pair with the data source device when establishing a connection with the data source device, the user can realize the connection without perception, thereby improving user experience, and raising the connection establishment efficiency and communication efficiency.

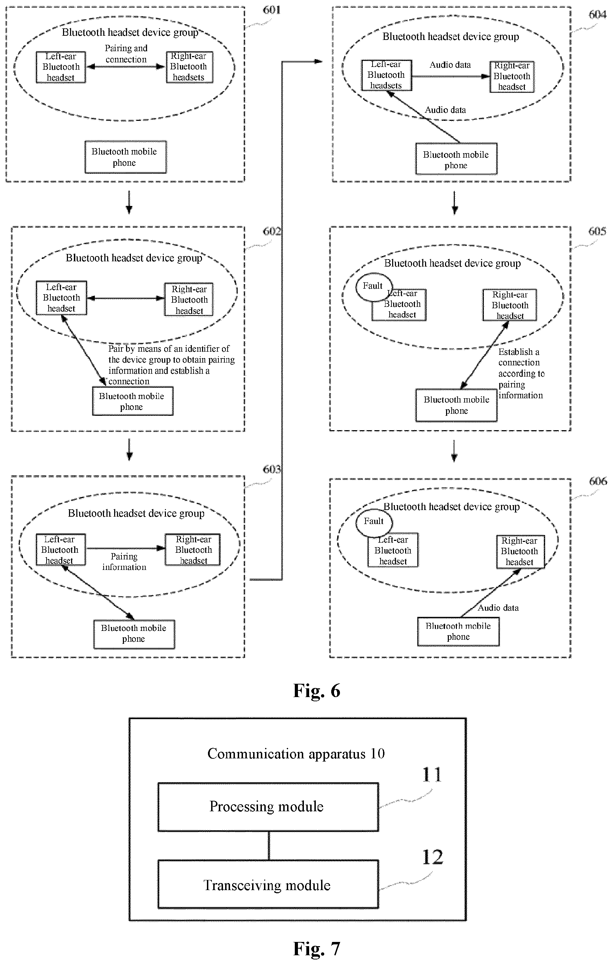

Below, the foregoing communication method is described in detail with reference to Fig. 6, by taking the first device as a left-ear Bluetooth headset, the second device as a right-ear Bluetooth headset and the data source device as a Bluetooth mobile phone for example.

Fig. 6 is a schematic view of a communication process provided by embodiments of the present invention. As shown in Fig. 6, the communication process comprises a process 601 to a process 606.

As shown in process 601, the left-ear Bluetooth headset and the right-ear Bluetooth headset are paired and connected to form a Bluetooth headset device group.

As shown in process 602, the left-ear Bluetooth headset may pair with a Bluetooth mobile phone by means of an identifier of the device group (an identifier of the Bluetooth headset device group) to obtain pairing information, and the left-ear Bluetooth headset establishes a connection with the Bluetooth mobile phone by means of the pairing information.

As shown in process 603, the left-ear Bluetooth headset sends the pairing information obtained from pairing with the Bluetooth mobile phone to the right-ear Bluetooth headset.

As shown in process 604, the Bluetooth mobile phone sends audio data to the left-ear Bluetooth headset, and the left-ear Bluetooth headset sends the audio data to the right-ear Bluetooth headset.

As shown in process 605, when the left-ear Bluetooth headset is faulty, the right-ear Bluetooth headset will establish a connection with the Bluetooth mobile phone by means of the pairing information.

As shown in process 606, the Bluetooth mobile phone sends audio data to the right-ear Bluetooth headset.

In the above process, the right-ear Bluetooth headset and the left-ear Bluetooth headset may be paired and connected to construct a Bluetooth headset device group. The left-ear Bluetooth headset pairs with the Bluetooth mobile phone by means of an identifier of the device group so as to obtain pairing information, and sends the pairing information to the right-ear Bluetooth headset. After the left-ear Bluetooth headset establishes the connection with the Bluetooth mobile phone by means of the pairing information, the Bluetooth mobile phone may send audio data to the left-ear Bluetooth headset, and the left-ear Bluetooth headset sends the data to the right-ear Bluetooth headset. When the left-ear Bluetooth headset is faulty, the right-ear Bluetooth headset and the Bluetooth mobile phone may establish a connection directly by means of the pairing information so that the Bluetooth mobile phone may send the audio data to the right-ear Bluetooth headset. When the left-ear Bluetooth headset is faulty, the right-ear Bluetooth headset may establish a connection with the Bluetooth mobile phone and receive audio data sent by the Bluetooth mobile phone to improve communication reliability. The right-ear Bluetooth headset may establish a connection with the Bluetooth mobile phone directly according to the pairing information without re-pairing, so that the connection is realized without perception of the user, which not only improves user experience but also raises connection establishment efficiency and communication efficiency.

Fig. 7 is a structural schematic view of a communication apparatus provided by embodiments of the present invention. The communication apparatus 10 may be used in the first device. The communication apparatus 10 comprises a processing module 11 and a transceiving module 12, wherein,

The processing module 11 pairs with a data source device by means of an identifier of the device group to obtain pairing information, wherein the first device is any device in the device group, and the pairing information is information based on which a device in the device group establishes a connection with the data source device;

The transceiving module 12 is used to send the pairing information to at least one second device in the device group by means of synchronization.

The communication apparatus provided by embodiments of the present invention may implement the technical solution shown in the foregoing method embodiment. Their realization principles and beneficial effects are similar and not described again here.

In a possible implementation, the pairing information includes a link key.

In a possible implementation, the processing module 11 is further used to establish a connection with the data source device according to the pairing information after the processing module 11 pairs with the data source device by means of the identifier of the device group to obtain the pairing information.

In a possible implementation, the pairing information is used to cause the second device to establish a connection with the data source device according to the pairing information; or,

The pairing information is used to cause the second device to establish a connection with the data source device according to the pairing information when preset conditions are met.

In a possible implementation, the preset conditions include at least one of the following conditions:
A link between the first device and the data source device is faulty;
The electric quantity of the first device is smaller than a first threshold value;
The device state of the first device is an abnormal state;
The quality of a signal between the first device and the data source device is smaller than a second threshold value.

In a possible implementation, the transceiving module 12 is specifically used to:
store the pairing information in a preset storage area, which is an area accessible to the at least one second device.

In a possible implementation, the transceiving module 12 is specifically used to:
send the pairing information to the at least one second device.

In a possible implementation, the at least one second device is a device in the device group except the first device.

In a possible implementation, the transceiving module 12 is further used to send a notification message to other devices in the device group except the first device after the processing module 11 pairs with a data source device by means of an identifier of the device group to obtain pairing information. The notification message is used to cause the state of the other devices to be updated to a state of being invisible to devices outside the group.

In a possible implementation, before the processing module 11 pairs with a data source device by means of an identifier of the device group to obtain pairing information, the state of every device in the device group is a state of being visible to devices outside the group.

In a possible implementation, an identifier of the devices in the device group that is visible to devices outside the device group is an identifier of the device group.

In a possible implementation, the processing module 11 is further used to pair with and connect other devices in the device group to construct the device group before the processing module 11 pairs with a data source device by means of an identifier of the device group to obtain pairing information.

In a possible implementation, the identifier of the device group is determined according to a preset addressing rule.

In a possible implementation, the identifier of the device group is the same as the identifier of a device in the device group.

In a possible implementation, the devices in the device group are wireless transceiving devices or wired transceiving devices.

In a possible implementation, the Bluetooth devices are Bluetooth audio devices.

In a possible implementation, the Bluetooth audio devices are Bluetooth headsets or Bluetooth speakers.

The communication apparatus provided by embodiments of the present invention may implement the technical solution shown in the foregoing method embodiment. Their realization principles and beneficial effects are similar and not described again here.

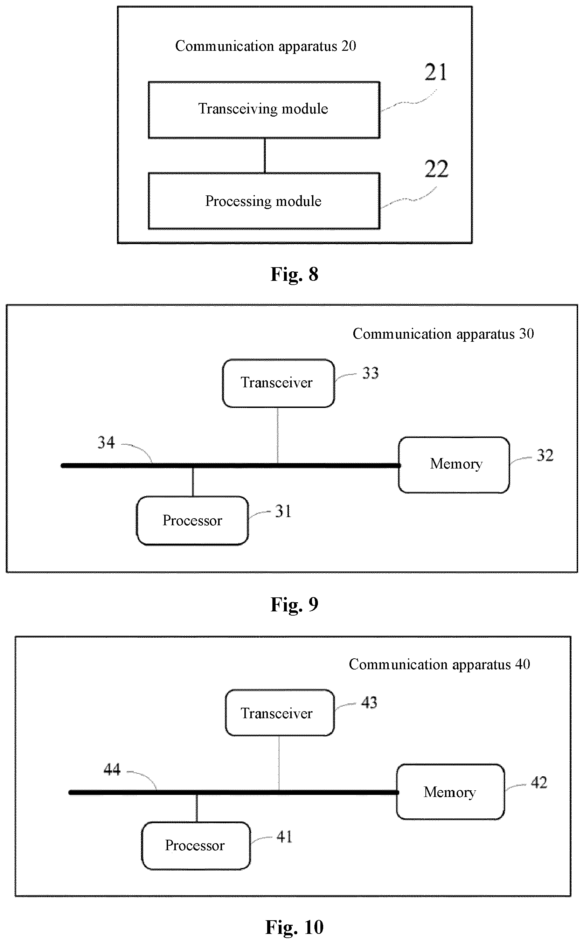

Fig. 8 is a structural schematic view of an alternative communication apparatus provided by embodiments of the present invention. The communication apparatus 20 may be used in the second device. The communication apparatus 20 comprises a transceiving module 21 and a processing module 22, wherein,

The transceiving module 21 is used to obtain pairing information sent by the first device by means of synchronization, wherein the first device and the second device are both devices in the same device group, and the pairing information is generated by pairing the first device with a data source device by means of the device group;

The processing module 22 is used to establish a connection with the data source device according to the pairing information.

The communication apparatus provided by embodiments of the present invention may implement the technical solution shown in the foregoing method embodiment. Their realization principles and beneficial effects are similar and not described again here.

In a possible implementation, the processing module 22 is specifically used to establish a connection with the data source device according to the pairing information when the preset conditions are met.

In a possible implementation, the preset conditions include at least one of the following conditions:
A link between the first device and the data source device is faulty;
The electric quantity of the first device is smaller than a first threshold value;
The device state of the first device is an abnormal state;
The quality of a signal between the first device and the data source device is smaller than a second threshold value.

In a possible implementation, the transceiving module 21 is specifically used to obtain the pairing information in a preset storage area. The pairing information is stored in the preset storage area by the first device.

In a possible implementation, the transceiving module 21 is specifically used to receive the pairing information sent by the first device.

In a possible implementation, the transceiving module 21 is further used to receive a notification message sent by the first device after the transceiving module 21 obtains the pairing information sent by the first device by means of synchronization;

The processing module 22 is further used to update the state of the second device to a state of being invisible to devices outside the group according to the notification message.

Fig. 9 is a structural schematic view of hardware of the communication apparatus provided by embodiments of the present application. As shown in Fig. 9, the communication apparatus 30 comprises: a memory 31, a processor 32 and a transceiver 33, wherein the memory 31 may communicate with the processor 32; as an example, the memory 31, the processor 32 and the transceiver 33 may communicate by means of a communication bus 34, the memory 31 is used to store a computer program, and the processor 32 executes the computer program to realize the foregoing communication method. For example, the processor 32 implements relevant steps implemented by the first device in the foregoing method embodiment.

Fig. 10 is a structural schematic view of the hardware of the communication apparatus provided by the present application. As shown in Fig. 10, the communication apparatus 40 comprises: a memory 41, a processor 42 and a transceiver 43, wherein the memory 41 communicates with the processor 42; as an example, the memory 41, a processor 42 and a transceiver 43 may communicate by means of a communication bus 44, the memory 41 is used to store a computer program, and the processor 42 executes the computer program to realize the foregoing communication method. For example, the processor 42 implements relevant steps implemented by the first device in the foregoing method embodiment.

Alternatively, the foregoing processor may be a central processing unit (CPU) and may also be other general-purpose processors, digital signal processors (DSP), application specific integrated circuit (ASIC), etc. The general-purpose processors may be microprocessors or may be any conventional processors. The steps of the blockchain node connection establishment method disclosed in combination with the present application may be directly implemented by means of a hardware processor, or implemented by means of hardware and software modules in the processor in a combined manner.

Embodiments of the present invention further provide a device group, comprising the communication apparatus shown by the embodiment in Fig. 9, and the communication apparatus shown by at least one embodiment in Fig. 10. For example, the device group may comprise a first device and at least one second device.

Embodiments of the present invention further provide a communication system, comprising the foregoing device group and a data source device. The devices in the device group are used to pair with the data source device by means of an identifier of the device group. The device group and the data source device may further establish a connection and receive and send data. The processes may refer to the foregoing method embodiment and are not described again.

Embodiments of the present invention further provide a computer-readable storage medium, comprising a computer program stored therein, wherein when the program is executed by a processor, the communication method in any of the foregoing method embodiments is realized.

All or some of the steps of the foregoing method embodiments may be completed by means of hardware related to program instructions. The foregoing program may be stored in a readable memory. When the program is executed, the steps of the foregoing method embodiments are executed; while the foregoing memory (storage medium) includes: read-only memory (ROM), RAM, flash memory, hard disk, solid state disk, magnetic tape, floppy disk, optical disc and any combination thereof.

The present invention is described with reference to the flowcharts and/or block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or another programmable device to generate computer-implemented processing. Therefore, the instructions executed on the computer or another programmable device are used to provide steps for implementing a specific function in one or more processes in the flowcharts and/or in one or more blocks in the block diagrams. In the present application, the terms "first," "second," etc., are used to distinguish similar objects and are not necessarily used to describe a specific sequence or order. In the present application, "a plurality of" refers to two or more than two. "And/or" describes an association of associated objects and means that there may be three relations. For example, A and/or E may indicate that A exists separately, A and B exist together, and B exists separately. The character "/" generally means that the former and latter associated objects are in a relation of " or."

## Claims

1. A method for communication, comprising:
after a data source device discovers a first device (AA) in a device group using a group identifier, pairing (301) the first device (AA) with the data source device using the group identifier to obtain pairing information, the device group identifier uniquely identifying the device group, wherein
a status of each device in the device group is set as visible to one or more devices outside the device group,
devices in the device group are identified to the one or more devices outside the device group by the group identifier, and
the pairing information is generated by the first device (AA) using the group identifier and an identifier of the data source device;
transmitting (506) a notification message from the first device (AA) to one or more other devices in the device group, the notification message including an instruction to update a status of each of the one or more other devices in the device group to be invisible to the one or more devices outside the device group; and
providing (302) the pairing information to a second device (BB) in the device group, the pairing information being used for establishing a connection between the second device (BB) and the data source.

2. The method of claim 1, wherein the pairing information comprises a link key.

3. The method of claim 1, further comprising:
after pairing (301) the first device (AA) with the data source device using the group identifier, establishing (303) a connection between the first device (AA) and the data source device using the pairing information.

4. The method of claim 1, wherein the pairing information is used for establishing a connection between the second device (BB) and the data source when a predetermined condition is met, and the predetermined condition comprises at least one of:
a link between the first device (AA) and the data source device malfunctioning;
a battery power of the first device (AA) being below a first threshold;
a status of the first device (AA) being abnormal; or
a quality of a signal between the first device (AA) and the data source device being below a second threshold.

5. The method of claim 1, wherein providing (302) the pairing information to the second device (BB) in the device group comprises:
storing, by the first device (AA), the pairing information in a predetermined storage area accessible to the second device (BB).

6. The method of claim 1, wherein providing (302) the pairing information to the second device (BB) in the device group comprises:
transmitting the pairing information from the first device (AA) to the second device (BB).

7. The method of claim 1, wherein the second device (BB) is in the device group, and the second device (BB) is different from the first device (AA).

8. The method of claim 1, further comprising:
before pairing the first device (AA) with the data source device using the group identifier, pairing and connecting the first device (AA) with the one or more other devices in the device group to establish the device group.

9. The method of claim 1, wherein the group identifier is determined in accordance with a predetermined rule.

10. The method of claim 1, wherein the group identifier the group identifier is the same as an identifier of one of the devices in the device group.

11. The method of claim 1, wherein the devices in the device group comprises a wireless device or a wired device, preferably wherein the wireless device comprises a Bluetooth^{®} device and more preferably wherein the Bluetooth^{®} device comprises a Bluetooth^{®} audio device and even more preferably wherein the Bluetooth^{®} audio device comprises a Bluetooth^{®} earbud or a Bluetooth^{®} audio system.

12. A method for communication, wherein the method comprises:
before establishing (303) a connection between a first device (AA) and a data source device, obtaining (302), by a second device (BB), pairing information provided by the first device (AA), wherein
the first device (AA) and the second device (BB) are in a device group,
the pairing information is obtained by pairing the first device (AA) with the data source device using a group identifier, the group identifier uniquely identifying the device group,
before pairing (301) the first device (AA) with the data source device using the group identifier to obtain the pairing information, a status of each device in the device group is set as visible to a device outside the device group, and
devices in the device group are identified to the device outside the device group by the group identifier;
receiving, by the second device (BB), a notification message transmitted (506) by the first device (AA) and updating (507), by the second device (BB), a status of the second device (BB) to be invisible to the device outside the device group in accordance with the notification message; and
establishing a connection between the second device (BB) and the data source device using the pairing information.

13. The method of claim 15, wherein the connection between the second device (BB) and the data source device is established when a predetermined condition is met, and the predetermined condition comprises at least one of:
a link between the first device (AA) and the data source device malfunctioning;
a battery power of the first device (AA) being below a first threshold;
a status of the first device (AA) being abnormal; or
a quality of a signal between the first device (AA) and the data source device being below a second threshold.

14. The method of claim 12, wherein obtaining, by the second device (BB), the pairing information provided by the first device (AA) comprises:
obtaining, by the second device (BB), the pairing information stored in a predetermined storage area by the first device (AA).

15. The method of claim 12, wherein obtaining, by the second device (BB), the pairing information provided by the first device (AA) comprises:
receiving, by the second device (BB), the pairing information transmitted by the first device (AA).

16. A non-transitory computer-readable storage medium comprising a computer program stored thereon, wherein the computer program, when being executed by a processor, implements the method of any of claims 1-15.

17. A communication apparatus comprising a storage device and a processor, the processor executing a program instruction in the storage device to implement the method of any of claims 1-15.

18. A communications group comprising:
a first device (AA) and a second device (BB) each comprising a storage device and a processor, wherein the storage device of the first device (AA) stores a computer program which when executed by the processor of the first device (AA) causes the first device (AA) to implement the method of any of claims 1-11 and the storage device of the second device (BB) stores a computer program which when executed by the processor of the second device (BB) causes the second device (BB) to implement the method of any of claims 12-16.

19. A communication system comprising:
the communications group of claim 18; and
a data source device, the devices in the device group being capable of being paired with the data source device using the group identifier.

## Patentansprüche

1. Verfahren zur Kommunikation, umfassend:
nachdem eine Datenquellenvorrichtung unter Verwendung einer Gruppenkennung eine erste Vorrichtung (AA) in einer Vorrichtungsgruppe entdeckt hat, Koppeln (301) der ersten Vorrichtung (AA) mit der Datenquellenvorrichtung unter Verwendung der Gruppenkennung, um Kopplungsinformationen zu erlangen, wobei die Vorrichtungsgruppenkennung die Vorrichtungsgruppe eindeutig identifiziert, wobei
ein Status jeder Vorrichtung in der Vorrichtungsgruppe für eine oder mehrere Vorrichtungen außerhalb der Vorrichtungsgruppe auf sichtbar gesetzt wird,
Vorrichtungen in der Vorrichtungsgruppe für die eine oder die mehreren Vorrichtungen außerhalb der Vorrichtungsgruppe durch die Gruppenkennung identifiziert werden, und
die Kopplungsinformationen unter Verwendung der Gruppenkennung und einer Kennung der Datenquellenvorrichtung durch die erste Vorrichtung (AA) erzeugt werden;
Übertragen (506) einer Benachrichtigungsnachricht durch die erste Vorrichtung (AA) an eine oder mehrere andere Vorrichtungen in der Vorrichtungsgruppe, wobei die Benachrichtigungsnachricht eine Anweisung enthält, einen Status von jeder der einen oder der mehreren anderen Vorrichtungen in der Vorrichtungsgruppe zu aktualisieren, um für die eine oder mehreren Vorrichtungen außerhalb der Vorrichtungsgruppe unsichtbar zu sein; und
Bereitstellen (302) der Kopplungsinformationen an eine zweite Vorrichtung (BB) in der Vorrichtungsgruppe, wobei die Kopplungsinformationen zum Herstellen eines Zusammenhangs zwischen der zweiten Vorrichtung (BB) und der Datenquelle verwendet werden.

2. Verfahren nach Anspruch 1, wobei die Kopplungsinformationen einen Verbindungsschlüssel umfassen.

3. Verfahren nach Anspruch 1, ferner umfassend:
nach Koppeln (301) der ersten Vorrichtung (AA) mit der Datenquellenvorrichtung unter Verwendung der Gruppenkennung, Herstellen (303) eines Zusammenhangs zwischen der ersten Vorrichtung (AA) und der Datenquellenvorrichtung unter Verwendung der Kopplungsinformationen.

4. Verfahren nach Anspruch 1, wobei die Kopplungsinformationen zum Herstellen eines Zusammenhangs zwischen der zweiten Vorrichtung (BB) und der Datenquelle verwendet werden, wenn eine vorbestimmte Bedingung erfüllt ist, und die vorbestimmte Bedingung mindestens eines von Folgenden umfasst:
eine Verbindung zwischen der ersten Vorrichtung (AA) und der Datenquellenvorrichtung ist gestört;
eine Batterieleistung der ersten Vorrichtung (AA) ist unter einem ersten Schwellenwert;
ein Status der ersten Vorrichtung (AA) ist anormal; oder
eine Qualität eines Signals zwischen der ersten Vorrichtung (AA) und der Datenquellenvorrichtung ist unter einem zweiten Schwellenwert.

5. Verfahren nach Anspruch 1, wobei ein Bereitstellen (302) der Kopplungsinformationen an die zweite Vorrichtung (BB) in der Vorrichtungsgruppe Folgendes umfasst:
Speichern, durch die erste Vorrichtung (AA), der Kopplungsinformationen in einem vorbestimmten Speicherbereich, der für die zweite Vorrichtung (BB) zugänglich ist.

6. Verfahren nach Anspruch 1, wobei ein Bereitstellen (302) der Kopplungsinformationen an die zweite Vorrichtung (BB) in der Vorrichtungsgruppe Folgendes umfasst:
Übertragen der Kopplungsinformationen durch die erste Vorrichtung (AA) an die zweite Vorrichtung (BB).

7. Verfahren nach Anspruch 1, wobei die zweite Vorrichtung (BB) in der Vorrichtungsgruppe ist und die zweite Vorrichtung (BB) von der ersten Vorrichtung (AA) verschieden ist.

8. Verfahren nach Anspruch 1, ferner umfassend:
vor einem Koppeln der ersten Vorrichtung (AA) mit der Datenquellenvorrichtung unter Verwendung der Gruppenkennung, Koppeln und Zusammenhängen der ersten Vorrichtung (AA) mit der einen oder den mehreren anderen Vorrichtungen in der Vorrichtungsgruppe, um die Vorrichtungsgruppe herzustellen.

9. Verfahren nach Anspruch 1, wobei die Gruppenkennung in Übereinstimmung mit einer vorbestimmten Regel bestimmt wird.

10. Verfahren nach Anspruch 1, wobei die Gruppenkennung gleich ist wie eine Kennung einer der Vorrichtungen in der Vorrichtungsgruppe.

11. Verfahren nach Anspruch 1, wobei die Vorrichtungen in der Vorrichtungsgruppe eine kabellose Vorrichtung oder eine kabelgebundene Vorrichtung umfassen, bevorzugt wobei die kabellose Vorrichtung eine Bluetooth^{®}-Vorrichtung umfasst und bevorzugter wobei die Bluetooth^{®}-Vorrichtung eine Bluetooth^{®}-Audiovorrichtung umfasst und noch bevorzugter wobei die Bluetooth^{®}-Audiovorrichtung einen Bluetooth^{®}-Ohrhörer oder ein Bluetooth^{®}-Audiosystem umfasst.

12. Verfahren zur Kommunikation, wobei das Verfahren Folgendes umfasst:
vor Herstellen (303) eines Zusammenhangs zwischen einer ersten Vorrichtung (AA) und einer Datenquellenvorrichtung, Erlangen (302), durch eine zweite Vorrichtung (BB), von Kopplungsinformationen, die durch die erste Vorrichtung (AA) bereitgestellt werden, wobei
die erste Vorrichtung (AA) und die zweite Vorrichtung (BB) in einer Vorrichtungsgruppe sind,
die Kopplungsinformationen durch Koppeln der ersten Vorrichtung (AA) mit der Datenquellenvorrichtung unter Verwendung einer Gruppenkennung erlangt werden, wobei die Gruppenkennung die Vorrichtungsgruppe eindeutig identifiziert,
vor Koppeln (301) der ersten Vorrichtung (AA) mit der Datenquellenvorrichtung unter Verwendung der Gruppenkennung, um die Kopplungsinformationen zu erlangen, ein Status jeder Vorrichtung in der Vorrichtungsgruppe für eine Vorrichtung außerhalb der Vorrichtungsgruppe auf sichtbar gesetzt wird, und
die Vorrichtungen in der Vorrichtungsgruppe für die Vorrichtung außerhalb der Vorrichtungsgruppe durch die Gruppenkennung identifiziert werden;
Empfangen, durch die zweite Vorrichtung (BB), einer Benachrichtigungsnachricht, die durch die erste Vorrichtung (AA) übertragen (506) wird und Aktualisieren (507), durch die zweite Vorrichtung (BB), eines Status der zweiten Vorrichtung (BB), um in Übereinstimmung mit der Benachrichtigungsnachricht für die Vorrichtung außerhalb der Vorrichtungsgruppe unsichtbar zu sein; und
Herstellen eines Zusammenhangs zwischen der zweiten Vorrichtung (BB) und der Datenquellenvorrichtung unter Verwendung der Kopplungsinformationen.

13. Verfahren nach Anspruch 15, wobei der Zusammenhang zwischen der zweiten Vorrichtung (BB) und der Datenquellenvorrichtung hergestellt wird, wenn eine vorbestimmte Bedingung erfüllt ist, und die vorbestimmte Bedingung mindestens eines von Folgenden umfasst:
eine Verbindung zwischen der ersten Vorrichtung (AA) und der Datenquellenvorrichtung ist gestört;
eine Batterieleistung der ersten Vorrichtung (AA) ist unter einem ersten Schwellenwert;
ein Status der ersten Vorrichtung (AA) ist anormal; oder
eine Qualität eines Signals zwischen der ersten Vorrichtung (AA) und der Datenquellenvorrichtung ist unter einem zweiten Schwellenwert.

14. Verfahren nach Anspruch 12, wobei ein Erlangen, durch die zweite Vorrichtung (BB), der Kopplungsinformationen, die durch die erste Vorrichtung (AA) bereitgestellt werden, Folgendes umfasst:
Erlangen, durch die zweite Vorrichtung (BB), der Kopplungsinformationen, die durch die erste Vorrichtung (AA) in einem vorbestimmten Speicherbereich gespeichert werden.

15. Verfahren nach Anspruch 12, wobei ein Erlangen, durch die zweite Vorrichtung (BB), der Kopplungsinformationen, die durch die erste Vorrichtung (AA) bereitgestellt werden, Folgendes umfasst:
Empfangen, durch die zweite Vorrichtung (BB), der Kopplungsinformationen, die durch die erste Vorrichtung (AA) übertragen werden.

16. Nicht-transitorisches computerlesbares Speichermedium, umfassend ein darauf gespeichertes Computerprogramm, wobei das Computerprogramm, wenn es durch einen Prozessor ausgeführt wird, das Verfahren nach einem der Ansprüche 1-15 implementiert.

17. Kommunikationsgerät, umfassend eine Speichervorrichtung und einen Prozessor, wobei der Prozessor eine Programmanweisung in der Speichervorrichtung ausführt, um das Verfahren nach einem der Ansprüche 1-15 zu implementieren.

18. Kommunikationsgruppe, umfassend:
eine erste Vorrichtung (AA) und eine zweite Vorrichtung (BB), jeweils umfassend eine Speichervorrichtung und einen Prozessor, wobei die Speichervorrichtung der ersten Vorrichtung (AA) ein Computerprogramm speichert, das, wenn es durch den Prozessor der ersten Vorrichtung (AA) ausgeführt wird, die erste Vorrichtung (AA) veranlasst, das Verfahren nach einem der Ansprüche 1-11 zu implementieren, und die Speichervorrichtung der zweiten Vorrichtung (BB) ein Computerprogramm speichert, das, wenn es durch den Prozessor der zweiten Vorrichtung (BB) ausgeführt wird, die zweite Vorrichtung (BB) veranlasst, das Verfahren nach einem der Ansprüche 12-16 zu implementieren.

19. Kommunikationssystem, umfassend:
die Kommunikationsgruppe nach Anspruch 18; und
eine Datenquellenvorrichtung, wobei die Vorrichtungen in der Vorrichtungsgruppe in der Lage sind, unter Verwendung der Gruppenkennung mit der Datenquellenvorrichtung gekoppelt zu werden.

## Revendications

1. Procédé de communication, comprenant :
après qu'un dispositif source de données a découvert un premier dispositif (AA) dans un groupe de dispositifs utilisant un identifiant de groupe, l'appariement (301) du premier dispositif (AA) au dispositif source de données en utilisant l'identifiant de groupe pour obtenir des informations d'appariement, l'identifiant de groupe de dispositifs identifiant de manière unique le groupe de dispositifs, dans lequel
un état de chaque dispositif du groupe de dispositifs est défini comme visible à un ou plusieurs dispositifs en dehors du groupe de dispositifs,
les dispositifs du groupe de dispositifs sont identifiés face à l'un ou plusieurs dispositifs en dehors du groupe de dispositifs par l'identifiant de groupe, et
les informations d'appariement sont générées par le premier dispositif (AA) en utilisant l'identifiant de groupe et un identifiant du dispositif source de données ;
la transmission (506) d'un message de notification provenant du premier dispositif (AA) à un ou plusieurs autres dispositifs du groupe de dispositifs, le message de notification comprenant une instruction d'actualiser un état de chacun de l'un ou plusieurs autres dispositifs du groupe de dispositifs afin d'être invisibles à l'un ou plusieurs dispositifs extérieurs au groupe de dispositifs ; et
la fourniture (302) des informations d'appariement à un deuxième dispositif (BB) du groupe de dispositifs, les informations d'appariement étant utilisées pour établir une connexion entre le deuxième dispositif (BB) et la source de données.

2. Procédé selon la revendication 1, dans lequel les informations d'appariement comprennent une clé de liaison.

3. Procédé selon la revendication 1, comprenant en outre :
après l'appariement (301) du premier dispositif (AA) avec le dispositif source de données en utilisant l'identifiant de groupe, l'établissement (303) d'une connexion entre le premier dispositif (AA) et le dispositif source de données en utilisant les informations de couplage.

4. Procédé selon la revendication 1, dans lequel les informations d'appariement sont utilisées pour établir une connexion entre le deuxième dispositif (BB) et la source de données lorsqu'une condition prédéterminée est remplie, et la condition prédéterminée comprend au moins un élément parmi :
une liaison entre le premier dispositif (AA) et le dispositif source de données fonctionnant mal;
une puissance de batterie du premier dispositif (AA) étant inférieure à un premier seuil ;
un état du premier dispositif (AA) étant anormal ; ou
une qualité d'un signal entre le premier dispositif (AA) et le dispositif source de données étant inférieure à un deuxième seuil.

5. Procédé selon la revendication 1, dans lequel la fourniture (302) des informations d'appariement au deuxième dispositif (BB) dans le groupe de dispositifs comprend :
le stockage, par le premier dispositif (AA), des informations d'appariement dans une zone de stockage prédéterminée accessible au deuxième dispositif (BB).

6. Procédé selon la revendication 1, dans lequel la fourniture (302) des informations d'appariement au deuxième dispositif (BB) dans le groupe de dispositifs comprend :
la transmission des informations d'appariement du premier dispositif (AA) au deuxième dispositif (BB).

7. Procédé selon la revendication 1, dans lequel le deuxième dispositif (BB) est dans le groupe de dispositifs, et le deuxième dispositif (BB) est différent du premier dispositif (AA).

8. Procédé selon la revendication 1, comprenant en outre :
avant l'appariement du premier dispositif (AA) avec le dispositif source de données en utilisant l'identifiant de groupe, l'appariement et la connexion du premier dispositif (AA) avec l'un ou plusieurs autres dispositifs du groupe de dispositifs pour établir le groupe de dispositifs.

9. Procédé selon la revendication 1, dans lequel l'identifiant de groupe est déterminé conformément à une règle prédéterminée.

10. Procédé selon la revendication 1, dans lequel l'identifiant de groupe est le même qu'un identifiant de l'un des dispositifs du groupe de dispositifs.

11. Procédé selon la revendication 1, dans lequel les dispositifs du groupe de dispositifs comprennent un dispositif sans fil ou un dispositif filaire, de préférence dans lequel le dispositif sans fil comprend un dispositif Bluetooth^{®} et plus préférablement dans lequel le dispositif Bluetooth^{®} comprend un dispositif audio Bluetooth^{®} et encore plus préférablement dans lequel le dispositif audio Bluetooth^{®} comprend un écouteur Bluetooth^{®} ou un système audio Bluetooth^{®}.

12. Procédé de communication, le procédé comprenant :
avant l'établissement (303) d'une connexion entre un premier dispositif (AA) et un dispositif source de données, l'obtention (302), par un deuxième dispositif (BB), d'informations d'appariement fournies par le premier dispositif (AA), dans lequel
le premier dispositif (AA) et le deuxième dispositif (BB) font partie d'un groupe de dispositifs,
les informations d'appariement sont obtenues par appariement du premier dispositif (AA) avec le dispositif source de données en utilisant un identifiant de groupe, l'identifiant de groupe identifiant de manière unique le groupe de dispositifs,
avant l'appariement (301) du premier dispositif (AA) au dispositif source de données en utilisant l'identifiant de groupe pour obtenir les informations d'appariement, un état de chaque dispositif du groupe de dispositifs est défini comme étant visible à un dispositif en dehors du groupe de dispositifs, et
les dispositifs du groupe de dispositifs sont identifiés face au dispositif en dehors du groupe de dispositifs par l'identifiant de groupe ;
la réception, par le deuxième dispositif (BB), d'un message de notification transmis (506) par le premier dispositif (AA) et l'actualisation (507), par le deuxième dispositif (BB), d'un état du deuxième dispositif (BB) afin d'être invisible au dispositif en dehors du groupe de dispositifs conformément au message de notification ; et
l'établissement d'une connexion entre le deuxième dispositif (BB) et le dispositif source de données en utilisant les informations d'appariement.

13. Procédé selon la revendication 15, dans lequel la connexion entre le deuxième dispositif (BB) et le dispositif source de données est établie lorsqu'une condition prédéterminée est remplie, et la condition prédéterminée comprend au moins l'un parmi :
une liaison entre le premier dispositif (AA) et le dispositif source de données fonctionnant mal ;
une puissance de batterie du premier dispositif (AA) étant inférieure à un premier seuil ;
un état du premier dispositif (AA) étant anormal ; ou
une qualité d'un signal entre le premier dispositif (AA) et le dispositif source de données étant inférieure à un deuxième seuil.

14. Procédé selon la revendication 12, dans lequel l'obtention, par le deuxième dispositif (BB), des informations d'appariement fournies par le premier dispositif (AA) comprend :
l'obtention, par le deuxième dispositif (BB), des informations d'appariement stockées dans une zone de stockage prédéterminée par le premier dispositif (AA).

15. Procédé selon la revendication 12, dans lequel l'obtention, par le deuxième dispositif (BB), des informations d'appariement fournies par le premier dispositif (AA) comprend :
la réception, par le deuxième dispositif (BB), des informations d'appariement transmises par le premier dispositif (AA).

16. Support de stockage non transitoire lisible par ordinateur comprenant un programme informatique stocké sur celui-ci, dans lequel le programme informatique, lorsqu'il est exécuté par un processeur, met en oeuvre le procédé selon l'une quelconque des revendications 1 à 15.

17. Appareil de communication comprenant un dispositif de stockage et un processeur, le processeur exécutant une instruction de programme dans le dispositif de stockage pour mettre en oeuvre le procédé selon l'une quelconque des revendications 1 à 15.

18. Groupe de communication comprenant :
un premier dispositif (AA) et un deuxième dispositif (BB) comprenant chacun un dispositif de stockage et un processeur, dans lequel le dispositif de stockage du premier dispositif (AA) stocke un programme informatique qui, lorsqu'il est exécuté par le processeur du premier dispositif (AA) amène le premier dispositif (AA) à mettre en oeuvre le procédé selon l'une quelconque des revendications 1 à 11 et le dispositif de stockage du deuxième dispositif (BB) stocke un programme informatique qui, lorsqu'il est exécuté par le processeur du deuxième dispositif (BB), amène le deuxième dispositif (BB) à mettre en oeuvre le procédé selon l'une quelconque des revendications 12 à 16.

19. Système de communication comprenant :
le groupe de communications selon la revendication 18 ; et
un dispositif source de données, les dispositifs du groupe de dispositifs pouvant être appariés au dispositif source de données en utilisant l'identifiant de groupe.
